# FASCICULE DE BREVET EUROPEEN

(11) **EP 1 211 818 B1**
(45) Date de publication et mention de la délivrance du brevet: **14.04.2004**
(21) Numéro de dépôt: 01000652.6
(22) Date de dépôt: 22.11.2001
(51) Int. Cl.: H04B 7/005

(54) **Procédé d'economie de puissance dans un systeme de radiocommunications**
Verfahren zur Leistungseinsparung in einem Funkkommunikationssystem
Power saving in a radio communication system

(30) Priorité: 29.11.2000 FR 0015453
(43) Date de publication de la demande: 05.06.2002
(73) Titulaire: SAGEM S.A., 75015 Paris (FR)
(72) Inventeur: Staebler, Patrick, 78460 Villepreux (FR)
(74) Mandataire: Schmit, Christian Norbert Marie

(56) Documents cités:
- EP-A- 1 052 867

## Description

La présente invention à pour objet un procédé de communication radiofréquence. Le domaine de l'invention est celui des appareils pouvant effectuer des communications radiofréquences et pour lesquels on souhaite économiser l'énergie utilisée pour effectuer ces communications. Plus particulièrement le domaine de l'invention est celui de la téléphonie mobile, et celui des appareils pour effectuer des communications radiofréquences, appareils fonctionnant sur une batterie à autonomie limitée dans le temps. Le but de l'invention est d'augmenter l'autonomie d'appareils portables pouvant effectuer des communications radiofréquences et fonctionnant sur batterie. Un autre but de l'invention est de permettre un contrôle, par l'utilisateur, des capacités radiofréquences d'un appareil portable et de sa consommation.

Dans l'état de la technique on connaît des procédés de télécommunications, notamment locaux, comme le téléphone sans fil, le DECT ou BlueTooth. A chacun de ces procédés correspond un dispositif comportant un émetteur et un récepteur. L'émetteur est en général une borne fixe, et le récepteur un terminal mobile. Ces procédés sont régis par des recommandations qui définissent la puissance d'émission de l'émetteur et la sensibilité de réception du récepteur. Ces deux éléments combinés définissent une portée pour l'ensemble du dispositif. La portée est la distance dont on peut éloigner le récepteur de l'émetteur sans que la communication soit interrompue. Dans la pratique les portées n'excèdent pas quelques centaines de mètres. Ainsi pour BlueTooth il existe plusieurs classes de fonctionnement. Une premier classe, ou classe A, prévoit que l'émetteur a une puissance de 1 mW et une portée de 4 mètres pour le système. Dans une deuxième classe, ou classe B, l'émetteur a une puissance de 2,5 mW pour 15 mètres de portées et enfin une troisième classe, ou classe C, prévoit une puissance d'émission de 100 mW pour une portée de 100 mètres.

Dans la pratique l'émetteur et le récepteur sont appareillés une fois pour toutes. C'est à dire que l'émetteur est fixe, et que dans une utilisation courante le récepteur ne s'éloigne pas haut delà de la portée de l'émetteur. Ainsi le récepteur n'est jamais très éloigné de sa borne de chargement dans le cas d'un dispositif de téléphonie fixe par exemple. De ce fait la consommation de l'étage de réception radiofréquence de l'appareil récepteur n'est pas très importante puisque le récepteur peut être rechargé fréquemment, ou alimenté continûment.

Ce genre de problème se pose cependant lorsqu'on souhaite utiliser ces procédés de communications entre des appareils tels que des téléphones mobiles, et des périphériques de ces téléphones mobiles. Que ces périphériques soient maître ou esclave n'a pas d'incidence sur l'existence du problème. Par exemple dans le cas d'un périphérique esclave, on peut penser à un kit mains libres pour téléphone mobile, dans le cas d'un périphérique maître, on peut envisager un ordinateur portable utilisant le téléphone mobile comme organe de connexion à réseau de télécommunication. Dans l'une ou l'autre application, une liaison locale avec un périphérique, il est fréquent que le téléphone mobile se retrouve à plusieurs centaines de mètres, voir plusieurs centaines de kilomètres, du périphérique auquel il peut être connecté de manière locale par une liaison radiofréquence. La consommation de l'étage d'entrée radiofréquence du téléphone mobile lié à l'établissement de cette connexion est alors importante et surtout superflu. En effet, cet étage recherche en permanence un périphérique pour établir une communication. Pour l'exemple on peut citer un étage de réception BlueTooth qui consomme environ 100 mW. Cela réduit donc fortement l'autonomie d'un téléphone mobile comportant des circuits permettant d'établir une connexion selon la recommandation BlueTooth.

Une solution évidente à ce problème serait de déclencher manuellement, au moment opportun, les circuits permettant d'établir cette liaison locale radiofréquence. Cependant cela nuit à l'ergonomie du téléphone et oblige l'utilisateur à effectuer de multiples opérations visant à établir une connexion locale.

Le document EP-A-1 052 867 décrit deux appareils qui communiquent selon un mode économisant l'énergie.

Dans l'invention on résout ces problèmes en déportant le problème de l'alimentation sur l'émetteur et non plus sur le récepteur. En effet, la consommation du récepteur est principalement liée à la consommation de son étage radiofréquence, elle est plus particulièrement liée à un besoin pour cet étage d'avoir une sensibilité élevée. Dans l'invention on dégrade donc la sensibilité de l'étage radiofréquence de l'appareil mobile fonctionnant sur batterie. Pour palier à cette diminution de sensibilité, on augmente alors la puissance d'émission de l'appareil ne subissant pas, ou moins, des problèmes d'alimentations. Il est ainsi possible pour l'appareil fonctionnant sur batterie d'avoir un étage de réception radiofréquence fonctionnant en mode passif. Un mode passif est un mode qui, idéalement, ne consomme que l'énergie liée au traitement des signaux reçus, sans avoir besoin d'amplifier ces signaux pour pouvoir travailler dessus.

L'invention a donc pour objet un procédé de communication radiofréquence entre deux appareils, chacun de ces appareils comportant un étage électronique radiofréquence caractérisée en ce que
- on dégrade, de préférence par rapport à une recommandation d'un procédé de communication, une sensibilité de réception de l'étage radiofréquence du premier appareil dans un mode de veille du premier appareil,
- on augmente, de préférence par rapport à une recommandation d'un procédé de communication, la puissance d'émission de l'étage radiofréquence du deuxième appareil dans un mode veille du deuxième appareil.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles pour la mise en oeuvre du procédé selon l'invention ;
- Figure 2 : une illustration d'étapes du procédé selon l'invention.

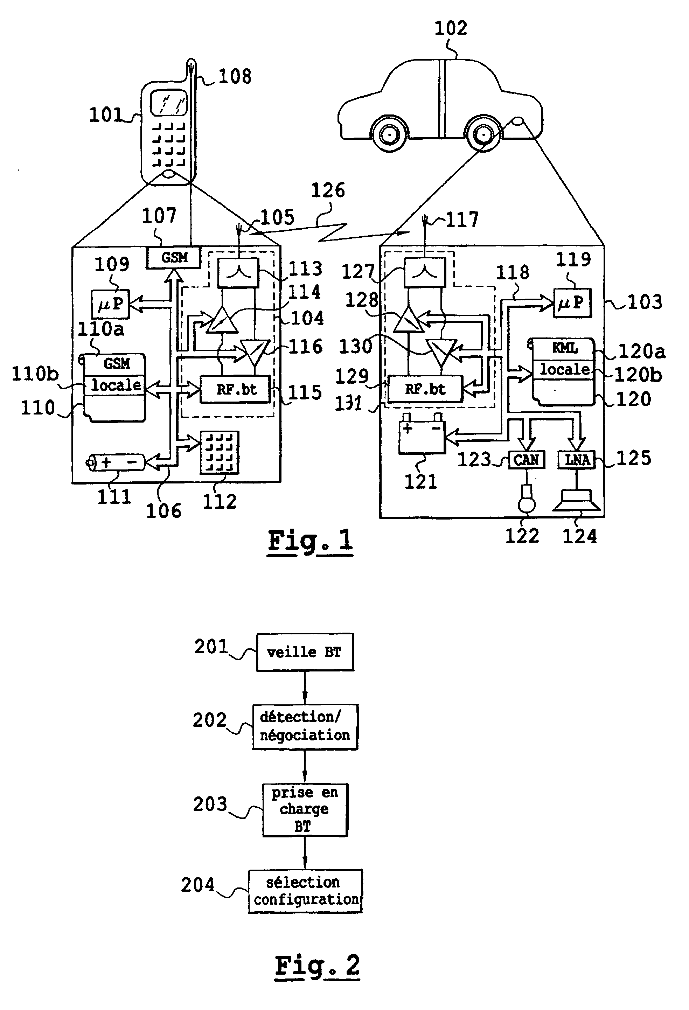

La figure 1 montre un téléphone 101 mobile et une automobile 102. Dans l'invention on considère que le téléphone 101 est un premier appareil de type téléphone mobile qui, en plus de ses moyens pour effectuer des opérations de téléphonie mobile, comporte des moyens permettant d'établir une connexion locale radiofréquence. Dans l'exemple de la description on considère que cette connexion locale se fait selon les recommandations BlueTooth. Dans la description on considère que l'automobile 102 comporte un dispositif 103 qui est un kit mains libres. Ce kit mains libres est soit un appareil de deuxième monte, soit un appareil intégré de base dans le véhicule. Le dispositif 103 est considéré comme un périphérique du téléphone 101. Le téléphone 101 et le périphérique 103 communique via une liaison radiofréquence du type BlueTooth.

La figure 1 montre que le téléphone 101 comporte des moyens 104 pour établir une communication locale selon la recommandation BlueTooth. Ces moyens 104 sont un étage d'émission réception radiofréquence. Ces moyens 104 sont d'une part connectés à une antenne 105, d'autre part connectés à un bus 106. Un bus est un ensemble de fils et ou de pistes comportant ces éléments en nombre suffisant pour véhiculer des signaux de commandes, d'adresses, des données, d'alimentations, d'interruptions et d'horloges.

Le téléphone 101 comporte d'autre part des circuits 107 GSM connectés d'une part à une antenne 108 et d'autre part au bus 106, un microprocesseur 109, une mémoire 110 et une batterie 111. Les éléments 109 à 111 sont connectés au bus 106.

La mémoire 110 comporte des codes d'instructions qui commandent le microprocesseur 109. A cette fin la mémoire 110 peut être vue comme étant divisée en plusieurs zones. La mémoire 110 comporte ainsi une zone 110a qui comporte des codes d'instructions qui commandent le microprocesseur lorsque celui-ci effectue des actions en liaison avec la fonction téléphonie mobile de l'appareil 101. La mémoire 110 comporte aussi une zone 110b qui comporte des codes d'instructions qui commandent le microprocesseur 109 lorsque celui-ci effectue des opérations correspondant à la gestion d'une communication locale via les moyens 104.

Le téléphone 101 comporte aussi un clavier 112 connecté au bus 106. Le clavier 112 permet à l'utilisateur du téléphone 101 de commander les différents moyens du téléphone 101.

La figure 1 montre que l'antenne 105 est connectée à un duplexer 113. Un duplexer, tel que le duplexer 113, est un circuit qui permet de séparer les signaux émis par l'antenne 105 de ceux reçus par l'antenne 105. Un tel circuit est connu dans l'état de la technique. L'antenne 105 est donc considérée comme une entrée/sortie du duplexer 113. Sur une entrée du duplexer 113 on connecte la sortie d'un amplificateur 114 à gain variable. L'entrée de l'amplificateur 114 est connecté à une sortie d'un circuit 115 radiofréquence. Une sortie du duplexer 113 est connectée à une entrée d'un amplificateur 116 à gain variable. Une sortie de l'amplificateur 116 est connectée à une entrée du circuit 115 radiofréquence. Les circuits 114 à 116 sont connectées au bus 106. La connexion des amplificateurs 114 et 116 au bus 106 permet ainsi de contrôler leurs gains. Dans le cas de l'amplificateur 114 cela permet de régler la puissance d'émission. Dans le cas de l'amplificateur 116 cela permet de régler la sensibilité du récepteur. Dans l'état de la technique la sensibilité d'un récepteur du type des moyens 104, c'est-à-dire BlueTooth est constante et fixée par la recommandation BlueTooth. Pour contrôler le gain, notamment de l'amplificateur 116, on peut par exemple contrôler son alimentation. En effet, moins l'amplificateur est alimenté moins son gain est important et plus sa consommation diminue.

Le rôle du circuit 115 est de recevoir, via le bus 106, des données numériques et de produire, à partir de ces données numériques, un signal analogique modulé correspondant à la recommandation utilisée pour rétablir une communication radiofréquence locale. Ces signaux analogiques produits sont amplifiés par l'amplificateur 114 et diffusés par l'antenne 105. Un autre rôle des circuits 115 est de recevoir via l'antenne 105 et l'amplificateur 116 des signaux analogiques modulés et de produire, à partir de ces signaux analogiques modulés, des signaux numériques pouvant être exploités par le microprocesseur 109 commandé par les codes d'instructions de la mémoire110.

La voiture 102 comporte donc le kit 103 main libre. Le kit 103 comporte des éléments 131 identiques aux éléments 104. Les éléments 131 sont donc connectés à une antenne 117 et à un bus 118. D'autre part le kit 103 comporte aussi un microprocesseur 119, une mémoire 120 et une batterie 121. Les éléments 119 à 121 sont connectés au bus 118. On considère ici que le kit 103 est branché sur la batterie 121 de l'automobile 102. Cela signifie que le kit 103 dispose d'une autonomie quasiment infinie, surtout si le véhicule 102 est en marche. L'autonomie infinie est à prendre relativement à l'autonomie que confère la batterie 111 à l'appareil 101. Il existe en effet plusieurs ordres de grandeurs entre la puissance que peut délivrer la batterie 111 et la puissance que peut délivrer la batterie 121.

La mémoire 120 comporte des codes instructions qui commandent le microprocesseur 119. La mémoire 120 comporte entre autre une zone 120a comportant des codes instructions correspondant à une activité kit mains libres du microprocesseur 119, et des codes instructions dans une zone 120b correspondant à des activités de communication locale radiofréquence du kit 103.

Pour remplir sa fonction de kit mains libres le dispositif 103 comporte aussi un microphone 122 connecté à un convertisseur 123 analogique numérique lui-même connecté au bus 118. Le dispositif 103 comporte aussi un haut-parleur 124 connecté à un convertisseur numérique analogique 125 lui-même connecté au bus 118. Le microphone 122 produit un signal de voix qui est converti en signaux numériques par le convertisseur 123. Les signaux numériques sont alors utilisables par le microprocesseur 119. Le haut-parleur 124 diffuse des signaux de voix produits par le convertisseur 125 à partir d'échantillons numériques que lui a fourni le microprocesseur 119.

L'antenne 117 permet d'établir une liaison 126 hertzienne avec le téléphone 101. L'antenne 117 est connectée à un duplexer 127. Une entrée de ce duplexer 127 est connectée à la sortie d'un amplificateur 128 à gain variable. Une entrée de l'amplificateur 128 est connectée à une sortie des circuits 129 radiofréquences. Une sortie du duplexer 127 est connectée à une entrée d'un amplificateur 130 à gain variable. La sortie de l'amplificateur 130 est connectée à une entrée des circuits 129. Les circuits 128 à 130 sont connectés au bus 118. Le rôle des circuits 128 à respectivement 130 est identique au rôle des circuits 114 à respectivement 116.

La figure 2 montre une étape 201 préliminaire. Dans l'étape 201 un utilisateur a activé le téléphone mobile 101 qui est alors en état de veille par rapport à une communication locale. Dans la description on utilise BlueTooth comme exemple pour décrire le mode d'établissement d'une liaison locale hertzienne. Dans la pratique il peut s'agir d'un tout autre mode de communication hertzienne, par exemple le mode DECT. Dans l'étape 201 le microprocesseur 109, commandé par les codes instructions de la zone 110b, commande l'amplificateur 116 de manière à dégrader la sensibilité de l'étage 104 radio fréquence du téléphone 101, par rapport à la sensibilité prescrite par la recommandation BlueTooth. La sensibilité d'un récepteur est sa faculté à discerner des signaux ayant un sens dans son environnement électromagnétique. Plus la sensibilité du récepteur est grande, plus le récepteur est susceptible de discerner des signaux de faible puissance. Idéalement, les circuits 104 fonctionnent en mode passif, c'est à dire que le gain de l'amplificateur 116 est proche de l'unité.

Par exemple le microprocesseur commande une diminution de la tension d'alimentation de l'amplificateur 116 pour diminuer la sensibilité de réception des moyens 104. Dans l'étape 201 l'utilisateur du téléphone 101 est relativement éloigné de la voiture 102, C'est-à-dire que l'utilisateur se trouve à une distance supérieure à une dizaine de mètres Dans l'étape 201 le microprocesseur 109 commandé par les codes instructions de la zone 110b analyse en permanence les échantillons produits par les circuits 115, à partir de signaux captés par l'antenne 105, afin de déterminer si le téléphone 101 se trouve à distance de communication d'un appareil susceptible d'établir une connexion du type 126. C'est-à-dire si l'appareil 101 se trouve à proximité d'un périphérique qui soit capable d'établir une communication selon la recommandation BlueTooth. On passe alors à une étape 202.

Dans l'étape 202, de détection et de négociation avec un périphérique, l'utilisateur du téléphone 101 s'est suffisamment approché de la voiture 102. C'est-à-dire qu'il se trouve à une distance inférieure à une dizaine de mètres de la voiture 102. Dans la pratique on peut dégrader suffisamment la sensibilité de l'appareil 101 pour que cette distance se trouve réduite à quelques mètres, par exemple quatre mètres. Le dispositif 103 de la voiture 102 émet en permanence, via les moyens 131, des trames selon un protocole prédéfini. Ces trames sont des interrogations pour savoir si un appareil en mesure à répondre à ces interrogations se trouve à la portée du dispositif 103. Ces interrogations sont émises par les moyens 131 commandés par le microprocesseur 119 lui-même commandé par des codes instructions par la zone 120b. Ces interrogations sont émises dès que la voiture est activée. C'est-à-dire en fait, dès qu'une personne utilisant la voiture a établi le contact à l'aide de la clef de contact. Cependant l'activation des moyens 131 peut être laissé à la discrétion de l'utilisateur de la voiture 102, via un bouton de commande spécifique par exemple.

Dans l'étape 202, le microprocesseur 119 commande l'amplificateur 128 afin que les trames d'interrogations soient émises à forte puissance, pour compenser la dégradation de sensibilité de réception de l'appareil 101. Dans un exemple on considère que ces trames sont émises à une puissance de 100 mW ce qui correspond, dans la recommandation BlueTooth, à une portée théorique d'une centaine de mètres. Il est tout à fait envisageable que la puissance d'émission soit plus importante. Lorsque l'utilisateur du téléphone 101 arrive à proximité de la voiture, la sensibilité du récepteur BlueTooth 104 est fortement dégradé. Il faut donc que l'utilisateur, porteur du téléphone 101, arrive suffisamment près pour que le téléphone 101 puisse détecter les trames émises même à fortes puissances par l'émetteur 131. Dans la description chacun des moyens 104 et 131 est à la fois émetteur et récepteur. Le terme sera donc employé indifféremment pour désigner ces appareils en fonction de l'action qu'ils effectuent.

Lorsque le téléphone 101 est suffisamment proche du dispositif 103, C'est-à-dire de la voiture 102, la puissance à laquelle les trames d'interrogations sont émises compense la dégradation de la sensibilité du récepteur 104. Les circuits 115 sont donc en mesure de produire des informations numériques correspondant aux trames d'interrogations qui ont été émises par le dispositif 103. A partir du moment ou les trames d'interrogation sont détectées par le téléphone 101, celui-ci y répond. Ces réponses se font sous le commandement du microprocesseur 109 commandé par les codes instructions de la zone 110b. Le microprocesseur constitue alors des trames de réponses qu'il fournit aux circuits 115 via le bus 106. Ces trames sont alors modulées et émises via l'amplificateur 114, le duplexer 113 et l'antenne 105. Comme le téléphone 101 et le dispositif 103 sont relativement proches, les trames de réponses peuvent être émises à une puissance relativement faible. Cette puissance est par exemple de l'ordre de 1 mW. Ainsi on constate qu'au cour de la phase de négociation et d'établissement de la liaison 126 le téléphone 101 fonctionne dans une mode BlueTooth de classe A dont les caractéristiques de réception ont été dégradés, alors que le dispositif 103 fonctionne dans un module BlueTooth de classe C.

On passe alors à une étape 203 de prise en charge BlueTooth. Dans l'étape 203 le canal de communication 126 est établie, selon les recommandations BlueTooth, et le téléphone 101 est en mesure de communiquer avec le dispositif 103 par la liaison 126. Ainsi lorsqu'un appel extérieur est reçu sur le téléphone mobile 101, le microprocesseur 109, commandé par des codes instructions de la zone 110a, reçoit en mode GSM des trames correspondant à des signaux de voix. Il extrait alors les signaux de voix de ces trames et transmet ces signaux aux circuits 115. Les circuits 115 modulent alors ces signaux et les émettent via la liaison 126. Ces signaux de voix sont alors reçus via l'antenne 117 par le dispositif 103. Le microprocesseur 119 commandé par des codes instructions de la zone 120a reçoit ces signaux de voix et les fournit au convertisseur 125 via le bus 118. Le convertisseur 125 produit des signaux analogiques correspondant aux signaux numériques de voix reçus via la liaison 126 et les diffuse via le haut-parleur 124.

De même le microphone 122 permet de capter la voix de la personne, ou des personnes, présentes dans la voiture 102. Cette voix une fois captée est échantillonnée par le convertisseur 123. Ces échantillons sont traités par le microprocesseur 119, sous le contrôle de codes instructions de la zone 120a, puis émis via le dispositif 131. Les échantillons de voix recueillis sont reçus via l'antenne 105 et encapsulés par le microprocesseur 109 afin d'être réémis via le circuit 107 GSM.

Il n'a été ici décrit qu'une possibilité pour réaliser un kit mains libres. Il est en effet possible que le dispositif 103 comporte des circuits qui lui permettent d'émettre et de recevoir selon la norme GSM. Dans ce cas dans la phase de négociation et de détection, le téléphone 101 et le dispositif 103 échangent des informations correspondant à identification de l'utilisateur du téléphone 101 pour permettre au dispositif 103 de se connecter sur le réseau GSM par exemple.

De même le téléphone 101 peut fonctionner selon une autre norme de téléphonie mobile (DCS, PCS, UMTS ou autre) sans que cela affecte l'invention.

De l'étape 203 on passe à une étape 204 de sélection de configuration. Dans la pratique l'étape 204 peut intervenir à n'importe quel moment. Dans l'étape 204 l'utilisateur du téléphone 101 utilise le clavier 112, qui lui donne accès à des menus de configuration du téléphone 101, pour sélectionner le mode de fonctionnement de la liaison locale BlueTooth. L'utilisateur peut ainsi choisir un fonctionnement selon l'invention, ou un fonctionnement classique BlueTooth. Dans ce cas il doit choisir dans quelle classe le téléphone mobile va fonctionner. C'est-à-dire soit en classe A avec une portée de 4 mètres, dans la classe B avec une portée de 15 mètres ou dans une classe C avec une portée de 100 mètres. S'il fait le choix de l'une de ces classes le téléphone mobile 101 va consommer excessivement d'énergie pendant un mode de veille de la liaison locale.

L'utilisateur peut donc ainsi sélectionner un fonctionnement selon l'invention en mode de veille et de repasser en mode BlueTooth intégrale pendant la communication. Dans ce cas le mode de veille sera économique en énergie mais le mode de communication sera plus gourmand. Il peut aussi choisir de rester dans un mode selon invention au cours de toute la liaison entre téléphone 101 et le dispositif 103. Cela est le mode le plus économique en ce qui concerne a consommation d'énergie.

Dans une variante de l'invention l'utilisateur peut aussi décider qu'au cours d'une communication non seulement le téléphone 101 repasse en mode standard BlueTooth, par exemple classe A, mais aussi le véhicule. C'est-à-dire après l'étape 202 le véhicule cesse d'émettre à 100 mW pour ne plus émettre qu'à 1 mW. Ainsi à la fois le dispositif 104 et le dispositif 107 fonctionne en mode BlueTooth classe A. Ces commutations de mode sont paramétrable par l'utilisateur mais se font automatiquement lorsque le téléphone 101 détecte un périphérique et signal sa présence à ce périphérique.

Dans une variante de l'invention le dispositif 131 émet à forte puissance et le téléphone 101 comporte des moyens pour récupérer une partie de la puissance émise par le dispositif 131. Cette puissance récupérée est alors utilisée pour alimenter le dispositif 104. Cela permet d'accroître encore l'autonomie du téléphone 101 puisqu'il n'est plus nécessaire d'avoir recours à la batterie 111 pour alimenter le circuit 104.

Dans la présente description on à fait référence au mode de communication BlueTooth et à ces différentes classes. Dans la pratique on peut effectivement utiliser ce mode et les classes décrites. Cependant il est aussi possible de dégrader la sensibilité prévue par ces classes ainsi qu'il a été décrit. De même il est possible d'utiliser un autre mode, par exemple DECT dans lequel on augmente, par rapport à la recommandation BlueTooth, la puissance d'émission de l'appareil ayant une autonomie infinie, et on dégrade, par rapport à la recommandation, la sensibilité de réception de l'appareil ayons une autonomie réduite.

## Revendications

1. Procédé de communication radiofréquence entre deux appareils (101, 103), chacun de ces appareils comportant un étage (104, 131) électronique radiofréquence **caractérisé en ce que**
- on dégrade (201), de préférence par rapport à une recommandation d'un procédé de communication, une sensibilité de réception, **relativement à une communication avec le deuxième appareil,** de l'étage radiofréquence du premier appareil dans un mode de veille du premier appareil,
- on augmente (202), de préférence par rapport à la recommandation du procédé de communication, la puissance d'émission, **relativement a une communication avec le premier appareil,** de l'étage radiofréquence du deuxième appareil dans un mode veille du deuxième appareil.

2. Procédé selon la revendication 1, **caractérisé en ce qu'**on maintient la sensibilité du premier appareil et la puissance d'émission du deuxième appareil dans un mode communication.

3. Procédé selon la revendication 1, **caractérisé en ce qu'**on augmente la sensibilité du premier appareil dans un mode communication.

4. Procédé selon l'une des revendications 1 ou 3, **caractérisé en ce qu'**on réduit la puissance d'émission du deuxième appareil dans un mode communication.

5. Procédé selon l'une des revendication 1, 3 ou 4, **caractérisé en ce qu'**on augmente automatiquement le sensibilité de l'étage radiofréquence du premier appareil, de préférence lorsque l'on détecte une émission du deuxième appareil.

6. Procédé selon l'une des revendications 1 ou 3 à 5, **caractérisé en ce qu'**on diminue automatiquement la puissance d'émission du deuxième appareil, de préférence lorsque la communication est établie entre les premiers et deuxièmes appareils.

7. Procédé selon l'une des revendications 1 à 6, **caractérisé en ce qu'**on sélectionne manuellement la configuration d'un des étage radiofréquence d'un appareil.

8. Procédé selon l'une des revendication 1 à 7, **caractérisé en ce qu'**on alimente l'étage radiofréquence du premier appareil avec une partie de l'énergie contenue dans le signal émis par l'étage radiofréquence du deuxième appareil.

9. Procédé de communication selon l'une des revendications 1 à 8, **caractérisé en ce que** le procédé de communication est un procédé de communication locale.

10. Procédé selon l'une des revendications 1 à 9, **caractérisé en ce que** le procédé de communication est de type BlueTooth.

## Claims

1. Method for radio frequency communication between two devices (101, 103), each of these devices comprising a radio frequency electronics stage (104, 131), **characterised in that**
- in a standby mode of the first device the sensitivity of reception of the radio frequency stage of the first device with respect to a communication with the second device is reduced (201), preferably in relation to a recommendation of a communication process;
- in a standby mode of the second device the transmission power of the radio frequency stage of the second device with respect to a communication with the first device is increased (202), preferably in relation to the recommendation of the communication process.

2. Method according to claim 1, **characterised in that** the sensitivity of the first device and the transmission power of the second device are maintained in a communication mode.

3. Method according to claim 1, **characterised in that** the sensitivity of the first device is increased in a communication mode.

4. Method according to one of claims 1 or 3, **characterised in that** the transmission power of the second device is reduced in a communication mode.

5. Method according to one of claims 1, 3 or 4, **characterised in that** the sensitivity of the radio frequency stage of the first device is increased automatically, preferably when a transmission from the second device is detected.

6. Method according to one of claims 1 or 3 to 5, **characterised in that** the transmission power of the second device is reduced automatically, preferably when communication is established between the first and second devices.

7. Method according to one of claims 1 to 6, **characterised in that** the configuration of the one of the radio frequency stages of a device is selected manually.

8. Method according to one of claims 1 to 7, **characterised in that** the radio frequency stage of the first device is powered with a portion of the power contained in the signal transmitted by the radio frequency stage of the second device.

9. Method for communication according to one of claims 1 to 8, **characterised in that** the communication method is a local communication process.

10. Method according to one of claims 1 to 9, **characterised in that** the communication method is of Bluetooth type.

## Patentansprüche

1. Verfahren zur Radiofrequenzkommunikation zwischen zwei Geräten (101, 103), wobei jedes von den Geräten eine elektronische Radiofrequenzstufe (104, 131) umfasst, **dadurch gekennzeichnet, dass**
- die Empfangsempfindlichkeit der Radiofrequenzstufe des ersten Geräts in einem Bereitschaftszustand des ersten Geräts in bezug auf eine Kommunikation mit dem zweiten Gerät verschlechtert wird (201), vorzugsweise im Verhältnis zu einem empfohlenen Kommunikationsprozess,
- die Sendeleistung der Radiofrequenzstufe des zweiten Geräts in einem Bereitschaftszustand des zweiten Geräts in bezug auf eine Kommunikation mit dem ersten Gerät erhöht wird (202), vorzugsweise im Verhältnis zu dem empfohlenen Kommunikationsprozess.

2. Verfahren nach Anspruch 1, **dadurch gekennzeichnet, dass** die Empfindlichkeit des ersten Geräts und die Sendeleistung des zweiten Geräts in einem Kommunikationszustand beibehalten wird.

3. Verfahren nach Anspruch 1, **dadurch gekennzeichnet, dass** die Empfindlichkeit des ersten Geräts in einem Kommunikationszustand erhöht wird.

4. Verfahren nach einem der Ansprüche 1 bis 3, **dadurch gekennzeichnet, dass** die Sendeleistung des zweiten Geräts in einem Kommunikationszustand verringert wird.

5. Verfahren nach einem der Ansprüche 1, 3 oder 4, **dadurch gekennzeichnet, dass** die Empfindlichkeit der Radiofrequenzstufe des ersten Geräts automatisch erhöht wird, vorzugsweise sobald eine Sendung des zweiten Geräts festgestellt wird.

6. Verfahren nach einem der Ansprüche 1 oder 3 bis 5, **dadurch gekennzeichnet, dass** die Sendeleistung des zweiten Geräts automatisch verringert wird, vorzugsweise sobald die Kommunikation zwischen dem ersten und dem zweiten Gerät aufgebaut ist.

7. Verfahren nach einem der Ansprüche 1 bis 6, **dadurch gekennzeichnet, dass** die Konfiguration einer der Radiofrequenzstufen eines Geräts manuell ausgewählt wird.

8. Verfahren nach einem der Ansprüche 1 bis 7, **dadurch gekennzeichnet, dass** die Radiofrequenzstufe des ersten Geräts mit einem Teil der Energie versorgt wird, die im von der Radiofrequenzstufe des zweiten Geräts ausgesandten Signals enthalten ist.

9. Kommunikationsverfahren nach einem der Ansprüche 1 bis 8, **dadurch gekennzeichnet, dass** der Kommunikationsprozess ein lokaler Kommunikationsprozess ist.

10. Verfahren nach einem der Ansprüche 1 bis 9, **dadurch gekennzeichnet, dass** der Kommunikationsprozess ein Blue Tooth Prozess ist.
